# EUROPÄISCHE PATENTSCHRIFT

(11) **EP 4 141 602 B1**
(45) Veröffentlichungstag und Bekanntmachung des Hinweises auf die Patenterteilung: **01.01.2025**
(21) Anmeldenummer: 22173950.1
(22) Anmeldetag: 18.05.2022
(51) Int. Cl.: G05D 1/00

(54) **VERFAHREN UND SYSTEM ZUM ERKENNEN VON TIEREN UND/ODER HINDERNISSEN AUF EINER VON EINER LANDWIRTSCHAFTLICHEN FELDBEARBEITUNGSMASCHINE ZU BEARBEITENDEN FLÄCHE**
METHOD AND SYSTEM FOR DETECTING ANIMALS AND / OR OBSTACLES ON A SURFACE TO BE PROCESSED BY AN AGRICULTURAL FIELD PROCESSING MACHINE
PROCÉDÉ ET SYSTÈME DE DÉTECTION DES ANIMAUX ET/OU DES OBSTACLES SUR UNE SURFACE À TRAITER PAR UNE MACHINE AGRICOLE À TRAITER LES CHAMPS

(30) Priorität: 31.08.2021 DE 102021122536
(43) Veröffentlichungstag der Anmeldung: 01.03.2023
(73) Patentinhaber: CLAAS E-Systems GmbH, 49201 Dissen (DE)
(72) Erfinder: Noyer, Pierre, 49074 Osnabrück (DE); Schmid, Christian, 88696 Owingen (DE); Wetzel, Andreas, 88370 Ebenweiler (DE)
(74) Vertreter: CLAAS Gruppe

(56) Entgegenhaltungen:
- EP-B1- 3 150 037
- WO-A1-2022/107587
- JP-A- 2021 070 413
- US-A1- 2018 338 422

## Beschreibung

Die Erfindung betrifft ein Verfahren und ein System zum Erkennen von Tieren und/oder Hindernissen auf einer von einer landwirtschaftlichen Feldbearbeitungsmaschine zu bearbeitenden Fläche mit einem Drohnensystem, das mindestens eine Flugdrohne mit einem berührungslos arbeitenden Sensor zum Erkennen der Tiere bzw. Hindernisse aufweist.

Beim Einsatz von Feldbearbeitungsmaschinen, insbesondere Mähmaschinen, kann es zu Unfällen mit Wildtieren kommen, die sich auf einem Feld aufhalten. Diese Unfälle führen häufig zu schweren Verletzungen oder dem Tod des Wildtieres und können Beschädigungen an der Feldbearbeitungsmaschine nach sich ziehen. Zudem kann eine Verunreinigung des Ernteguts mit einem Wildtierkadaver zu Krankheiten, z.B. Botulismus, führen, wenn das Erntegut als Tierfutter eingesetzt wird. Auch besteht eine Gefahr, dass unerkannte Hindernisse wie z. B. große Feldsteine beim Einsatz der Feldbearbeitungsmaschine zu Beschädigungen an der Maschine selbst führen.

Um Wildunfälle oder die Beschädigung an Hindernissen möglichst zu vermeiden, ist es bekannt, unmittelbar vor dem Bearbeiten des Feldes eine Feldbegehung vorzunehmen. Dieses ist jedoch zeit- und personalaufwendig.

Weiter ist der Einsatz von Sensoren bekannt, die das Feld auf mögliche versteckte Tiere oder sonstige Hindernisse untersuchen. Sensoren werden beispielsweise an den Feldbearbeitungsmaschinen selbst angeordnet. Auf ein zeit- und personalintensives Absuchen des Feldes vor dem Einsatz der Feldbearbeitungsmaschine kann auf diese Weise verzichtet werden. Die Detektionsreichweite der Sensoren ist jedoch eingeschränkt, so dass dieses Verfahren für moderne Feldbearbeitungsmaschinen mit hohen Bearbeitungseffizienz häufig ungeeignet ist bzw. übermäßig schnelle Reaktionszeiten erfordern würde.

Eine weitere Möglichkeit stellt der Einsatz von Flugdrohnen mit berührungslos arbeitenden, insbesondere optisch arbeitenden Sensoren dar. Aus der Druckschrift DE 10 2017 113 245 A1 ist beispielsweise ein Verfahren und eine Vorrichtung zum Erkennen von Tieren in der Fahrgasse einer landwirtschaftlichen Feldbearbeitungsmaschine bekannt, bei der eine ferngesteuerte Flugdrohne über die von der Feldbearbeitungsmaschine zu befahrende Feldgasse geführt wird, um dort versteckte Tiere aufzuspüren. Vorteilhaft kann hier die Fahrgasse ausreichend weit vor der die Fahrgasse abfahrenden Feldbearbeitungsmaschine oder auch vollständig vor Beginn der Feldbearbeitung abgeflogen werden und auf Tiere oder ggf. auch andere Hindernisse abgesucht werden. Es sind dadurch keine übermäßig schnellen Reaktionszeiten oder schnell reagierende Schutzvorrichtungen, beispielsweise schnell reagierende Hubvorrichtungen für ein Mähwerk, erforderlich, um Kollisionen vermeiden zu können.

Gemäß der genannten Druckschrift kann eine Steuerung der Drohne manuell über eine Fernbedienung erfolgen. Zudem ist gemäß einem Ausführungsbeispiel vorgesehen, dass die Drohne bei ihrem Flug die landwirtschaftliche Feldbearbeitungsmaschine erkennt und automatisch eine vorgegebene Relativposition zu der Feldbearbeitungsmaschine einnimmt, beispielsweise ihr vorauseilt. Wird dabei allerdings ein zu großer Abstand gewählt, können Tiere bzw. Hindernisse insbesondere in Kurven bzw. Wendebereichen der Feldbearbeitungsmaschine nicht erkannt werden. Wird dagegen ein zu kleiner Abstand gewählt, sinkt die Vorwarnzeit.

Eine sicherere Überwachung ist möglich, wenn das Abfliegen der Fahrgassen vorab erfolgt, wozu bei den beschriebenen Verfahren möglichst genaue Informationen über die abzufahrenden Flächen an den Drohnenpiloten übergeben werden müssen. Dieses ist allerdings fehleranfällig und kann dazu führen, dass der tatsächlich von der Feldbearbeitungsmaschine zu bearbeitende Feldbereich nicht vollumfänglich abgesucht wurde.

US2018338422 A1 offenbart ein System umfassend ein landwirtschaftliches Fahrzeug mit einem ersten Lagerbehälter, der zur Lagerung eines landwirtschaftlichen Produkts konfiguriert ist, ein Trägerfahrzeug mit einem zweiten Lagerbehälter und ein Luftfahrzeug mit einem oder mehreren Sensoren, die zur Überwachung des Füllstands des zweiten Lagerbehälters konfiguriert sind. Das Luftfahrzeug ist so konfiguriert, dass es ein erstes Signal, das den Füllstand des zweiten Lagerbehälters anzeigt, an das landwirtschaftliche Fahrzeug übermittelt.

Es ist eine Aufgabe der vorliegenden Erfindung, ein Verfahren der eingangs genannten Art zu beschreiben, das eine bestmögliche Tier- bzw. Hinderniserkennung bietet und bei dem eine möglichst gute Übereinstimmung der abgesuchten Fläche mit der zu bearbeitenden Fläche gegeben ist. Es ist eine weitere Aufgabe der vorliegenden Erfindung, ein System zur Durchführung des Verfahrens anzugeben.

Diese Aufgabe wird durch ein Verfahren und ein System mit den Merkmalen des jeweiligen unabhängigen Anspruchs gelöst. Vorteilhafte Ausgestaltungen und Weiterbildungen sind Gegenstand der abhängigen Ansprüche.

Ein erfindungsgemäßes Verfahren der eingangs genannten Art zeichnet sich dadurch aus, dass das Drohnensystem und die Feldbearbeitungsmaschine in einem Datenkontakt zu einem übergeordneten Managementsystem stehen und Flächendaten zwischen dem Managementsystem und dem Drohnensystem einerseits und dem Managementsystem und der Feldbearbeitungsmaschine andererseits ausgetauscht werden.

Somit sind sowohl die Feldbearbeitungsmaschine, als auch das Drohnensystem nicht voneinander entkoppelt, sondern sie sind in ein gemeinsames System eingebunden, in dem ein Austausch von Daten von beiden Komponenten mit dem übergeordneten Managementsystem, insbesondere einem sog. "Farmmanagementsystem", erfolgt. Auf diese Weise wird sichergestellt, dass sowohl die Feldbearbeitungsmaschine, als auch das Drohnensystem über gleiche Informationen hinsichtlich der zu bearbeitenden Fläche verfügen.

Die ausgetauschten Flächendaten umfassen dabei z.B. geographische Koordinaten der zu bearbeitenden Fläche und liegen bevorzugt in einem standardisierten Format, z.B. dem ISOXML-Format, vor.

Das Drohnensystem von dem Managementsystem empfangene Flächendaten mit Informationen zu erkannten Tieren und/oder Hindernissen und sendet sie als angereicherte Flächendaten an das Managementsystem zurück. Weiter sendet das Managementsystem dann die empfangenen angereicherten Flächendaten oder darauf basierende angereicherte Flächendaten an die Feldbearbeitungsmaschine, woraufhin die Feldbearbeitungsmaschine eine Bearbeitung der Fläche abhängig von den angereicherten Flächendaten steuert und entsprechend auf erkannte Tiere bzw. Hindernisse reagieren kann, z.B. rechtzeitig stoppt, ein Mähwerk anhebt, die Fahrt verlangsamt usw..

Zudem kann die Feldbearbeitungsmaschine die empfangenen angereicherten Flächendaten um eigens ermittelte Informationen zu erkannten Tieren und/oder Hindernissen ergänzen und als weiter angereicherte Flächendaten zurück an das Managementsystem senden. Dazu können Informationen von Sensoren an der Feldbearbeitungsmaschine genutzt werden oder auch Beobachtungen eines Bedieners einfließen.

Die vom Managementsystem empfangenen weiter angereicherten Flächendaten können vorteilhaft eingesetzt werden, um zukünftige Bearbeitungsvorgänge auf dieser bearbeiteten Fläche weiter zu optimieren. Die gewonnenen Daten können dabei nicht nur zur Vermeidung von Kollisionen mit Tieren und/oder sonstigen Hindernissen eingesetzt werden, sondern stellen wertvolle Informationen auch für zukünftige anders geartete Bearbeitungsschritte, beispielsweise ein Aussäen oder ein Umpflügen oder Grubbern der Fläche dar.

Ein erfindungsgemäßes System zum Erkennen von Tieren und/oder Hindernissen auf einer von einer landwirtschaftlichen Feldbearbeitungsmaschine zu bearbeitenden Fläche zeichnet sich dadurch aus, dass das Drohnensystem und die Feldbearbeitungsmaschine zum Datenaustausch mit einem übergeordneten Managementsystem gekoppelt sind, um Flächendaten zwischen dem Managementsystem und dem Drohnensystem einerseits und dem Managementsystem und der Feldbearbeitungsmaschine andererseits auszutauschen. Es ergeben sich die im Zusammenhang mit dem Verfahren beschriebenen Vorteile.

Das Drohnensystem dazu eingerichtet, von dem Managementsystem empfangene Flächendaten mit Informationen zu erkannten Tieren und/oder Hindernissen zu ergänzen und als angereicherte Flächendaten an das Managementsystem zurück zu senden. Das Managementsystem ist dazu eingerichtet, auf den angereicherte Flächendaten basierende angereicherte Flächendaten an die Feldbearbeitungsmaschine zu senden. Weiter ist die Feldbearbeitungsmaschine dazu eingerichtet, die angereicherte Flächendaten von dem Managementsystem zu empfangen und eine Bearbeitung der Fläche abhängig von den angereicherten Flächendaten zu steuern.

In einer vorteilhaften Ausgestaltung des Systems wird eine Wärmebildkamera als Sensor der mindestens einen Flugdrohne eingesetzt. Dadurch können Tiere mit hoher Sensitivität und weitestgehend tageszeitunabhängig erkannt werden.

In einer weiteren vorteilhaften Ausgestaltung des Systems ist das Managementsystem ein Farmmanagementsystem. Insbesondere durch die Nutzung von standardisierten Datenformaten für die Flächendaten kann ein bestehendes Farmmanagementsystem leicht Verfahrens erweitert werden und zur Durchführung des erfindungsgemäßen Verfahrens genutzt werden.

Die Erfindung wird nachfolgend anhand eines Ausführungsbeispiels mithilfe einer Figur näher erläutert. Die Figur zeigt:

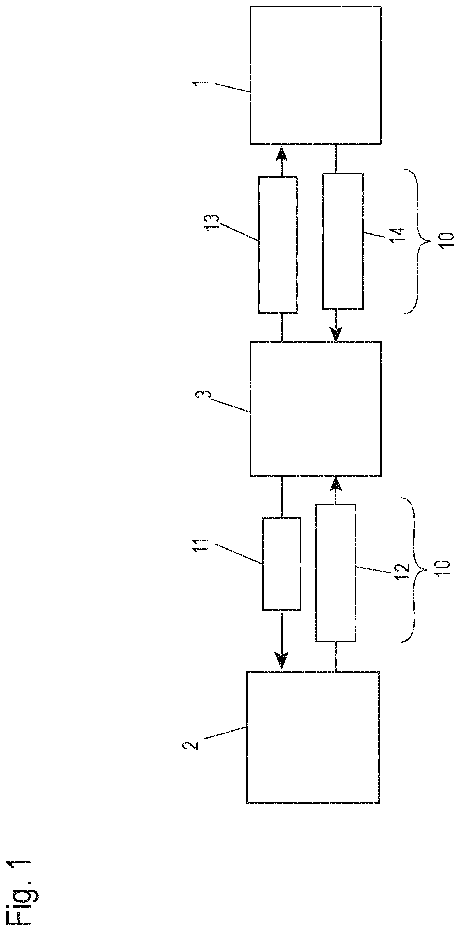

- Figur 1: eine schematische Darstellung eines Systems zum Erkennen von Tieren bzw. Hindernissen.

In Figur 1 ist eine schematische Ansicht eines Systems zum Erkennen von Tieren bzw. Hindernissen auf einer zu bearbeitenden landwirtschaftlichen Fläche in Art eines Blockdiagramms dargestellt.

Das System umfasst eine landwirtschaftliche Feldbearbeitungsmaschine 1, beispielsweise ein Mähfahrzeug. Weiter ist im System ein Drohnensystem 2 vorhanden, das zumindest eine Flugdrohne mit einem Sensor umfasst. Mit dem hier nicht dargestellten Sensor können Tiere und/oder Hindernisse auf einer zu bearbeitenden landwirtschaftlichen Fläche während eines Überflugs dieser Fläche erfasst und erkannt werden. Der Sensor arbeitet berührungslos und ist insbesondere als ein optischer Sensor ausgebildet, beispielsweise als eine Kamera. Besonders bevorzugt arbeitet diese Kamera in Wellenlängenbereichen, die das Aufspüren von Tieren mit hoher Sensitivität und weitestgehend tageszeitunabhängig ermöglicht. Besonders bevorzugt ist der Einsatz einer im Infrarot-Wellenlängenbereich sensitiven Kamera, beispielsweise einer sog. "Wärmebildkamera".

Neben der Flugdrohne kann das Drohnensystem 2 z.B. ein sich am Boden befindendes Steuerungssystem für die Flugdrohne 2 und/oder ein sich ggf. ebenfalls am Boden befindendes Auswertegerät für die vom mitfliegenden Sensor erfassten Daten umfassen.

Anmeldungsgemäß sind sowohl die Feldbearbeitungsmaschine 1 auch das Drohnensystem 2 nicht voneinander entkoppelt, sondern sie sind in ein gemeinsames System eingebunden, in dem ein Austausch von Daten 10 von beiden Komponenten mit einem übergeordneten Managementsystem 3, insbesondere einem sog. "Farmmanagementsystem", erfolgt. Auf diese Weise wird sichergestellt, dass sowohl die Feldbearbeitungsmaschine 1, als auch das Drohnensystem 2 über gleiche Informationen hinsichtlich der zu bearbeitenden Fläche verfügen.

Anhand der Figur 1 wird nachfolgend ein anmeldungsgemäßes Verfahren, das von dem dargestellten System ausgeführt werden kann, beschrieben.

In einem ersten Schritt werden vom Managementsystem 3 Flächendaten 11 an das Drohnensystem 2 gesendet. Die Flächendaten 11 umfassen zumindest eine genaue Angabe der geografischen Lage und Ausdehnung des zu bearbeitenden Feldes, also beispielsweise Geo-Positionsdaten (Koordinaten) des Umrisses des zu bearbeitenden Bereichs. Die Flächendaten 11 können zusätzlich Informationen über den abzufahrenden Weg umfassen oder auch Bodenbestandsdaten, die beispielsweise von einem Landwirt, der die Fläche bewirtschaftet, zuvor bereitgestellt wurden. Bevorzugt wird für die Flächendaten 11 ein universell eingesetztes Datenformat verwendet, beispielsweise das Datenformat "ISOXML".

Anhand der Flächendaten 11 legt das Drohnensystem 2, insbesondere ein Steuerungs- und Planungssystem desselben, Flugdaten für die Flugdrohne fest. Dieser Vorgang kann vollautomatisch oder auch mit Unterstützung einer Person ("Drohnenpilot") erfolgen.

In einem nächsten Verfahrensschritt wird gemäß der ermittelten Flugdaten der Flugdrohne die zu bearbeitende landwirtschaftliche Fläche abgeflogen, während gleichzeitig über den oder die Sensoren der Flugdrohne das zu bearbeitende Feld erfasst wird.

Die erfassten Sensordaten können in der Flugdrohne selbst ausgewertet werden. Aufgrund einer benötigten großen Rechenkapazität für die Auswertung, insbesondere die Bildverarbeitung der Sensordaten ist jedoch bevorzugt, die Sensordaten über Funk zu einer sich am Boden befindenden Auswerteeinheit zu senden.

Werden bei der Auswertung Tiere und/oder Hindernisse erkannt oder zumindest mögliche Aufenthaltsorte für Tiere identifiziert, werden diese Informationen als Zusatzinformationen (z. B. in Form von POIs - points of interests) den Flächendaten hinzugefügt. Wenn der Drohnenflug vollständig vor Beginn der Feldbearbeitung abgeschlossen ist, ist es ausreichend, die Zusatzdaten gesammelt den Flächendaten hinzuzufügen. Falls eine Feldbearbeitung schon beginnen soll, wenn der Drohnenflug noch nicht vollständig abgeschlossen ist, sind zum einen genaue Informationen über den geplanten Fahrweg der Feldbearbeitungsmaschine 1 in den Flächendaten 11 relevant, um die Reihenfolge der Erkundung verschiedener Feldflächen an den Fahrweg anzupassen, und zum anderen ist es sinnvoll, Hinweise auf Tiere und/oder Hindernisse inkrementell den Flächendaten hinzuzufügen, damit sie bereits verwertet werden können, auch wenn der Drohnenflug noch nicht abgeschlossen ist.

Derart um die ermittelten zusätzlichen Informationen ergänzte Flächendaten 11 werden dann in einem nächsten Schritt als angereicherte Flächendaten 12 von dem Drohnensystem 2 zum Managementsystem 3 übertragen.

Das Managementsystem 3 überträgt dann seinerseits angereicherte Flächendaten 13, die auf den empfangenen angereicherten Flächendaten 12 beruhen oder diese zumindest berücksichtigen, zur Feldbearbeitungsmaschine 1. In einer Ausgestaltung können auch die vom Managementsystem 3 empfangenen angereicherten Flächendaten 12 selbst weitergeleitet werden. Die Feldbearbeitungsmaschine 1 nimmt auf Basis dieser angereicherten Flächendaten 13 (oder 12) die Bearbeitung des Feldes vor. Wenn der Drohnenflug parallel zur Feldbearbeitung durchgeführt wird, wird die Übertragung der angereicherten Flächendaten 12 und 13 wiederholt durchgeführt, um sicherzustellen, dass Hinweise auf Tiere und/oder Hindernisse möglichst zeitnah von der Feldbearbeitungsmaschine 1 beachtet werden können.

Die angereicherten Flächendaten 13 können zur präzisen Steuerung der Feldbearbeitungsmaschine 1 entweder vollautomatisch oder unter Einbeziehung eines Bedieners der Feldbearbeitungsmaschine 1 während der Bearbeitung der landwirtschaftlichen Fläche genutzt werden. Zusätzlich oder alternativ können die im Managementsystem 3 bzw. von der Feldbearbeitungsmaschine 1 empfangenen angereicherten Flächendaten 12, 13 von dem Landwirt auch für andere Planungsschritte genutzt werden.

Während der Bearbeitung des Feldes mit der Feldbearbeitungsmaschine 1 können weitere Sensoren, die an der Feldbearbeitungsmaschine 1 montiert sind, zusätzliche Informationen über das Feld erfassen. Auch ein Bediener der Feldbearbeitungsmaschine 1 kann seine aufgenommenen Beobachtungen über das Feld, beispielsweise im Hinblick auf zusätzliche, von dem Drohnensystem 2 nicht erkannte Hindernisse oder Tiere oder mögliche Tierverstecke beisteuern. Die von der Feldbearbeitungsmaschine 1 empfangenen angereicherten Flächendaten 13 können auf diese Weise weiter ergänzt werden und als weiter angereicherte Flächendaten 14 zurück an das Managementsystem 3 gesendet werden. Die dort empfangenen weiter angereicherten Flächendaten 14 können wiederum eingesetzt werden, um zukünftige Bearbeitungsvorgänge auf diesem Feld weiter zu optimieren. Die gewonnenen Daten können dabei nicht nur zur Vermeidung von Kollisionen mit Tieren und/oder sonstigen Hindernissen eingesetzt werden, sondern stellen wertvolle Informationen auch für zukünftige anders geartete Bearbeitungsschritte, beispielsweise ein Aussäen oder ein Umpflügen oder Grubbern des Feldes dar.

### Bezugszeichenliste

- 1: Feldbearbeitungsmaschine
- 2: Drohnensystem
- 3: Managementsystem

- 10: Daten
- 11: Flächendaten
- 12, 13: angereicherte Flächendaten
- 14: weiter angereicherte Flächendaten

## Patentansprüche

1. Verfahren zum Erkennen von Tieren und/oder Hindernissen auf einer von einer landwirtschaftlichen Feldbearbeitungsmaschine (1) zu bearbeitenden Fläche mit einem Drohnensystem (2), das mindestens eine Flugdrohne mit einem berührungslos arbeitenden Sensor zum Erkennen der Tiere bzw. Hindernisse aufweist, **dadurch gekennzeichnet, dass** das Drohnensystem (2) und die Feldbearbeitungsmaschine (1) in einem Datenkontakt zu einem übergeordneten Managementsystem (3) stehen und Flächendaten (11-14) zwischen dem Managementsystem (3) und dem Drohnensystem (2) einerseits und dem Managementsystem (3) und der Feldbearbeitungsmaschine (1) andererseits ausgetauscht werden, wobei das Drohnensystem (2) von dem Managementsystem (3) empfangene Flächendaten (11) mit Informationen zu erkannten Tieren und/oder Hindernissen ergänzt und als angereicherte Flächendaten (12) an das Managementsystem (3) zurücksendet, wobei das Managementsystem (3) die angereicherten Flächendaten (12) oder auf den angereicherte Flächendaten (12) basierende angereicherte Flächendaten (13) an die Feldbearbeitungsmaschine (1) sendet, wobei die Feldbearbeitungsmaschine (1) eine Bearbeitung der Fläche abhängig von den angereicherten Flächendaten (12, 13) steuert.

2. Verfahren nach Anspruch 1, bei dem die Flächendaten (11-14) geographische Koordinaten der zu bearbeitenden Fläche umfassen.

3. Verfahren nach Anspruch 1 oder 2, bei dem die Flächendaten (11-14) in einem ISOXML-Format vorliegen.

4. Verfahren nach einem der Ansprüche 1 bis 3, bei dem die Feldbearbeitungsmaschine (1) die empfangenen angereicherten Flächendaten (12, 13) um eigens ermittelte Informationen zu erkannten Tieren und/oder Hindernissen ergänzt und als weiter angereicherte Flächendaten (14) zurück an das Managementsystem (3) sendet.

5. System zum Erkennen von Tieren und/oder Hindernissen auf einer von einer landwirtschaftlichen Feldbearbeitungsmaschine (1) zu bearbeitenden Fläche, wobei das System ein Drohnensystem (2), das mindestens eine Flugdrohne mit einem berührungslos arbeitenden Sensor zum Erkennen der Tiere bzw. Hindernisse aufweist, und das System sowohl die landwirtschaftliche Feldbearbeitungsmaschine (1) als auch ein übergeordnetes Managementsystem (3) umfasst,
**dadurch gekennzeichnet, dass** das Drohnensystem (2) und die Feldbearbeitungsmaschine (1) zum Datenaustausch mit dem übergeordneten Managementsystem (3) gekoppelt sind, um Flächendaten (11-14) zwischen dem Managementsystem (3) und dem Drohnensystem (2) einerseits und dem Managementsystem (3) und der Feldbearbeitungsmaschine (1) andererseits auszutauschen, wobei das Drohnensystem (2) dazu eingerichtet ist, von dem Managementsystem (3) empfangene Flächendaten (11) mit Informationen zu erkannten Tieren und/oder Hindernissen zu ergänzen und als angereicherte Flächendaten (12) an das Managementsystem (3) zurück zu senden, wobei das Managementsystem (3) dazu eingerichtet ist, die angereicherte Flächendaten (12) oder auf den angereicherte Flächendaten (12) basierende angereicherte Flächendaten (13) an die Feldbearbeitungsmaschine (1) zu senden, wobei die Feldbearbeitungsmaschine (1) dazu eingerichtet ist, die angereicherten Flächendaten (12, 13) von dem Managementsystem (3) zu empfangen und eine Bearbeitung der Fläche abhängig von den angereicherten Flächendaten (12, 13) zu steuern.

6. System nach Anspruch 5, bei dem der Sensor der mindestens einen Flugdrohne eine Wärmebildkamera ist.

7. System nach Anspruch 5 oder 6, bei dem das Managementsystem (3) ein Farmmanagementsystem ist.

## Claims

1. A method for detecting animals and/or obstacles on an area to be processed by an agricultural field processing machine (1), with a drone system (2) which has at least one aerial drone with a sensor which operates in a contactless manner for detecting the animals or obstacles, **characterized in that** the drone system (2) and the field processing machine (1) are in data contact with a superordinate management system (3) and area data (11 - 14) are exchanged between the management system (3) and the drone system (2) on the one side and the management system (3) and the field processing machine (1) on the other side, wherein the drone system (2) supplements area data (11) received from the management system (3) with information regarding detected animals and/or obstacles and sends them back to the management system (3) as enriched area data (12), wherein the management system (3) sends the enriched area data (12) or enriched area data (13) based on the enriched area data (12) to the field processing machine (1), wherein the field processing machine (1) controls processing of the area as a function of the enriched area data (12, 13).

2. The method according to claim 1, in which the area data (11 - 14) comprise geographical coordinates for the area to be processed.

3. The method according to claim 1 or claim 2, in which the area data (11 - 14) are in an ISO XML format.

4. The method according to one of claims 1 to 3, in which the field processing machine (1) supplements the received enriched area data (12, 13) with specifically determined information in respect of detected animals and/or obstacles and sends them back to the management system (3) as further enriched area data (14).

5. A system for detecting animals and/or obstacles on an area to be processed by an agricultural field processing machine (1), wherein the system has a drone system (2) which has at least one aerial drone with a sensor which operates in a contactless manner for detecting the animals or obstacles, and the system comprises both the agricultural field processing machine (1) as well as a superordinate management system (3), **characterized in that** the drone system (2) and the field processing machine (1) are coupled to the superordinate management system (3) for the exchange of data in order to exchange area data (11 - 14) between the management system (3) and the drone system (2) on the one side and the management system (3) and the field processing machine (1) on the other side, wherein the drone system (2) is configured to supplement area data (11) received from the management system (3) with information regarding detected animals and/or obstacles and to send them back to the management system (3) as enriched area data (12), wherein the management system (3) is configured to send the enriched area data (12) or enriched area data (13) based on the enriched area data (12) to the field processing machine (1), wherein the field processing machine (1) is configured to receive the enriched area data (12, 13) from the management system (3) and to control processing of the area as a function of the enriched area data (12, 13).

6. The system according to claim 5, in which the sensor of the at least one aerial drone is a thermal imaging camera.

7. The system according to claim 5 or claim 6, in which the management system (3) is a farm management system.

## Revendications

1. Procédé de détection d'animaux et/ou d'obstacles sur une surface devant être traitée par une machine à traiter les champs (1) agricole, comprenant un système de drone (2) qui présente au moins un drone aérien doté d'un capteur sans contact destiné à détecter les animaux ou les obstacles, **caractérisé en ce que** le système de drone (2) et la machine à traiter les champs (1) sont en contact de données avec un système de gestion (3) de niveau supérieur, et des données de surface (11 à 14) sont échangées entre le système de gestion (3) et le système de drone (2), d'une part, et le système de gestion (3) et la machine à traiter les champs (1), d'autre part, sachant que le système de drone (2) complète des données de surface (11) reçues du système de gestion (3) avec des informations sur des animaux et/ou des obstacles détectés et les renvoie au système de gestion (3) en tant que données de surface enrichies (12), le système de gestion (3) envoyant les données de surface enrichies (12), ou des données de surface enrichies (13) basées sur les données de surface enrichies (12), à la machine à traiter les champs (1), la machine à traiter les champs (1) commandant un traitement de la surface en fonction des données de surface enrichies (12, 13).

2. Procédé selon la revendication 1, selon lequel les données de surface (11 à 14) comprennent des coordonnées géographiques de la surface à traiter.

3. Procédé selon la revendication 1 ou 2, selon lequel les données de surface (11 à 14) se présentent au format ISOXML.

4. Procédé selon une des revendications 1 à 3, selon lequel la machine à traiter les champs (1) complète les données de surface enrichies (12, 13) avec des informations spécialement recueillies sur des animaux et/ou des obstacles détectés et les renvoie au système de gestion (3) en tant que données de surface enrichies davantage (14).

5. Système de détection d'animaux et/ou d'obstacles sur une surface devant être traitée par une machine à traiter les champs (1) agricole, le système comprenant un système de drone (2) qui présente au moins un drone aérien doté d'un capteur sans contact destiné à détecter les animaux ou les obstacles, et le système comprenant aussi bien la machine à traiter les champs (1) agricole qu'un système de gestion (3) de niveau supérieur, **caractérisé en ce que** le système de drone (2) et la machine à traiter les champs (1) sont couplés au système de gestion (3) de niveau supérieur aux fins d'échange de données, en vue d'échanger des données de surface (11 à 14) entre le système de gestion (3) et le système de drone (2), d'une part, et le système de gestion (3) et la machine à traiter les champs (1), d'autre part, le système de drone (2) étant conçu pour compléter des données de surface (11) reçues du système de gestion (3) avec des informations sur des animaux et/ou des obstacles détectés et pour les renvoyer en tant que données de surface enrichies (12) au système de gestion (3), le système de gestion (3) étant conçu pour envoyer à la machine à traiter les champs (1) les données de surface enrichies (12) ou des données de surface enrichies (13) basées sur les données de surface enrichies (12), la machine à traiter les champs (1) étant conçue pour recevoir les données de surface enrichies (12, 13) du système de gestion (3) et pour commander un traitement de la surface en fonction des données de surface enrichies (12, 13).

6. Système selon la revendication 5, dans lequel le capteur du drone aérien, au nombre d'au moins un, est une caméra thermique.

7. Système selon la revendication 5 ou 6, dans lequel le système de gestion (3) est un système de gestion d'exploitation.
1. Procédé de détection d'animaux et/ou d'obstacles sur une surface devant être traitée par une machine à traiter les champs (1) agricole, comprenant un système de drone (2) qui présente au moins un drone aérien doté d'un capteur sans contact destiné à détecter les animaux ou les obstacles, **caractérisé en ce que** le système de drone (2) et la machine à traiter les champs (1) sont en contact de données avec un système de gestion (3) de niveau supérieur, et des données de surface (11 à 14) sont échangées entre le système de gestion (3) et le système de drone (2), d'une part, et le système de gestion (3) et la machine à traiter les champs (1), d'autre part, sachant que le système de drone (2) complète des données de surface (11) reçues du système de gestion (3) avec des informations sur des animaux et/ou des obstacles détectés et les renvoie au système de gestion (3) en tant que données de surface enrichies (12), le système de gestion (3) envoyant les données de surface enrichies (12), ou des données de surface enrichies (13) basées sur les données de surface enrichies (12), à la machine à traiter les champs (1), la machine à traiter les champs (1) commandant un traitement de la surface en fonction des données de surface enrichies (12, 13).
2. Procédé selon la revendication 1, selon lequel les données de surface (11 à 14) comprennent des coordonnées géographiques de la surface à traiter.
3. Procédé selon la revendication 1 ou 2, selon lequel les données de surface (11 à 14) se présentent au format ISOXML.
4. Procédé selon une des revendications 1 à 3, selon lequel la machine à traiter les champs (1) complète les données de surface enrichies (12, 13) avec des informations spécialement recueillies sur des animaux et/ou des obstacles détectés et les renvoie au système de gestion (3) en tant que données de surface enrichies davantage (14).
5. Système de détection d'animaux et/ou d'obstacles sur une surface devant être traitée par une machine à traiter les champs (1) agricole, le système comprenant un système de drone (2) qui présente au moins un drone aérien doté d'un capteur sans contact destiné à détecter les animaux ou les obstacles, et le système comprenant aussi bien la machine à traiter les champs (1) agricole qu'un système de gestion (3) de niveau supérieur, **caractérisé en ce que** le système de drone (2) et la machine à traiter les champs (1) sont couplés au système de gestion (3) de niveau supérieur aux fins d'échange de données, en vue d'échanger des données de surface (11 à 14) entre le système de gestion (3) et le système de drone (2), d'une part, et le système de gestion (3) et la machine à traiter les champs (1), d'autre part, le système de drone (2) étant conçu pour compléter des données de surface (11) reçues du système de gestion (3) avec des informations sur des animaux et/ou des obstacles détectés et pour les renvoyer en tant que données de surface enrichies (12) au système de gestion (3), le système de gestion (3) étant conçu pour envoyer à la machine à traiter les champs (1) les données de surface enrichies (12) ou des données de surface enrichies (13) basées sur les données de surface enrichies (12), la machine à traiter les champs (1) étant conçue pour recevoir les données de surface enrichies (12, 13) du système de gestion (3) et pour commander un traitement de la surface en fonction des données de surface enrichies (12, 13).
6. Système selon la revendication 5, dans lequel le capteur du drone aérien, au nombre d'au moins un, est une caméra thermique.
7. Système selon la revendication 5 ou 6, dans lequel le système de gestion (3) est un système de gestion d'exploitation.
